# EUROPÄISCHE PATENTSCHRIFT

(11) **EP 2 242 919 B1**
(45) Veröffentlichungstag und Bekanntmachung des Hinweises auf die Patenterteilung: **16.12.2015**
(21) Anmeldenummer: 09712471.3
(22) Anmeldetag: 26.01.2009
(51) Int. Cl.: F02D 41/00, F02D 41/02, F02B 21/00, F02B 29/00, B60W 30/18, F02B 29/04, F02B 37/04, F02B 37/12

(54) **VERFAHREN ZUR STEUERUNG EINER DRUCKLUFTVERSORGUNG EINER BRENNKRAFTMASCHINE BEI EINEM ANFAHRVORGANG**
METHOD FOR CONTROLLING A COMPRESSED AIR SUPPLY OF AN INTERNAL COMBUSTION ENGINE DURING A STARTING PROCESS
PROCÉDÉ DE COMMANDE DE L'ALIMENTATION EN AIR COMPRIMÉ D'UN MOTEUR À COMBUSTION INTERNE LORS D'UN PROCESSUS DE DÉMARRAGE

(30) Priorität: 18.02.2008 DE 102008000326
(43) Veröffentlichungstag der Anmeldung: 27.10.2010
(73) Patentinhaber: ZF Friedrichshafen AG, 88038 Friedrichshafen (DE)
(72) Erfinder: RÜCHARDT, Christoph, 88131 Bodolz (DE); JÄGER, Thomas, 88074 Meckenbeuren (DE); MAIR, Roland, 88069 Tettnang-Laimnau (DE)
(86) Internationale Anmeldenummer: PCT/EP2009/050823
(87) Internationale Veröffentlichungsnummer: WO 2009/103589

(56) Entgegenhaltungen:
- EP-A2- 0 367 406
- WO-A1-2006/089779
- DE-C1- 3 906 312
- FR-A1- 2 689 180
- GB-A- 2 422 872

## Beschreibung

Die Erfindung betrifft ein Verfahren zum Betreiben eines Fahrzeugantriebsstranges mit einer Brennkraftmaschine, mit einem dieser Brennkraftmaschine zugeordneten Turbolader, mit einer Einrichtung zum Einblasen von zusätzlicher Druckluft in einen Luftansaugtrakt der Brennkraftmaschine, mit einer Anfahr- und Schaltkupplung sowie mit einem Getriebe, insbesondere zur Vorbereitung und Durchführung eines Anfahrvorgangs.

Beispielsweise aus den Patentanmeldungen WO 2006/037564 A1, WO 2006/089779 A1 und WO 2006/089780 A1 ist es bekannt, dass eine mit einem Turbolader ausgestattete Kolbenbrennkraftmaschine in ihrem unteren Drehzahlbereich ein vergleichsweise geringes Drehmoment abgibt, da die von einem konventionellen Turboauflader zur Drehmomenterhöhung in den Ansaugtrakt des Motors gelieferte Luftmenge systembedingt von demjenigen Abgasstrom der Brennkraftmaschine abhängt, welcher die Turbine des Turboladers antreibt. Dieses als Turboloch bekannte Phänomen kann hinsichtlich seiner Ausprägung von Turboladern mit variabler Geometrie abgemildert werden, bei denen die Turbinenschaufeln in Abhängigkeit vom zur Verfügung stehenden antreibenden Abgasstrom verstellbar ausgebildet sind. Da Turbolader mit variabler Geometrie vergleichsweise teuer in der Herstellung sowie nur mit komplexen Steuerungs- und Regelungsverfahren ansteuerbar sind, besteht in der Kraftfahrzeugindustrie ein Bedarf, mit einfacheren Einrichtungen und/oder Verfahren auch bei niedrigen Motordrehzahlen ein relativ hohes Antriebsdrehmoment der Brennkraftmaschine zu erzielen.

Vor diesem Hintergrund ist aus der DE 39 06 312 C1 sowie aus der DE 199 44 946 A1 jeweils eine Methode und eine Einrichtung zur Verkleinerung des genannten Turbolochs bekannt, bei denen während der Beschleunigung eines mit einem Turbolader ausgestatteten Dieselmotors aus einem Druckluftspeicher eine bestimmte Luftmenge in das Saugrohr des Motors eingeblasen und die Kraftstoff-Einspritzmenge dementsprechend angepasst wird. Die für den Motor benötigte Druckluft kann dabei aus einem Druckluftspeicher eines Druckluftbremssystems des Fahrzeugs entnommen werden.

Aus den eingangs genannten Druckschriften WO 2006/089779 A1 und WO 2006/089780 A1 ist es zudem bekannt, zur Verkleinerung des erwähnten Turbolochs bei einer turboaufgeladenen Brennkraftmaschine eine gesonderte Einrichtung zur Frischgas- bzw. Druckluftversorgung zu verwenden. Diese im Ansaugbereich der Brennkraftmaschine angeordnete Einrichtung verfügt über einen Luftansaugtrakt als Saugrohr, der eine verstellbare Drosselklappe und einen ersten Endanschluss zur Einströmung der Ansaugluft sowie einen zweiten Endanschluss zur Ausströmung in Richtung zu den Zylindern des Motors aufweist. Die Drosselklappe ist zum Verstellen an eine von einem Steuergerät ansteuerbare Verstellvorrichtung angekoppelt. Zwischen der Drosselklappe und dem zweiten Endanschluss ist ein Druckluftanschluss mit einer Öffnung ausgebildet, die in den rohrartigen Innenraum der Einrichtung mündet. Weiter ist vorgesehen, dass der Druckluftanschluss mit einer ein Ventil mit einer gesperrten und beliebig geöffneten Stellungen aufweisenden Druckluft-Mengenregelvorrichtung zusammenwirkt, die über einen elektrischen Eingang von einem elektrischen Steuergerät ansteuerbar ist. Die Verstellvorrichtung der Drosselklappe ist von der Mengenregelvorrichtung und/oder dem Steuergerät derart zwangsbetätigt, dass zu einer voll geöffneten Stellung der Drosselklappe eine voll gesperrte Stellung der Mengenregelvorrichtung zugeordnet ist.

Zur Steuerung dieser aus der WO 2006/089779 A1 und der WO 2006/089780 A1 bekannten Einrichtungen zur Drucklufteindüsung in den Ansaugtrakt der Brennkraftmaschine nutzt das Steuergerät Drehmomentanforderungssignale, die von dem Fahrpedal, einer Antriebsschlupfregelung, einer Geschwindigkeitsregeleinrichtung und/oder einem elektrischen Stabilisations-programm stammen, oder von Mitteln, welche dem Motorsteuersystem eine externe Drehmomentanforderung zuleiten.

Außerdem ist es aus der WO 2006/089779 A1 bekannt, dass bei der optimalen Steuerung der Einrichtung zur Versorgung der turboaufgeladenen Brennkraftmaschine mit Druckluft - oder wie dort formuliert mit Frischgas - das Steuerungsprogramm des Steuergerätes dieser Einrichtung vorbestimmte Angaben über die Bedingungen kennt, ab wann eine Lufteinblasung durchgeführt oder beendet werden soll. So kann beispielsweise berücksichtigt sein, dass berufliche Fernfahrer oder Autobusfahrer jeweils individuelle Fahrweisen haben, die durchschnittliche Beschleunigungswerte verlangen. So kann ein solcher Fahrer bestimmte Schaltpunkte beim Schalten des Getriebes bevorzugen. Diese können von dem genannten Steuergerät festgestellt, gespeichert und ausgearbeitet werden. Diese Daten werden von dem Steuergerät beispielsweise für die Bestimmung der Dauer der Drucklufteinblasung und für die Betätigung der Drosselklappe verwendet. Durch diese Vorgehensweise soll verhindert werden, dass der Druckluftverbrauch unnötig sowie unvorteilhaft hoch ist. Insbesondere ist hierbei vorgesehen, dass die Dauer der Drucklufteinblasung und Drosselklappenbetätigung von der Häufigkeit des Fahrerwunsches für eine Beschleunigung adaptiv von der Steuerungssoftware geregelt wird.

Weiter ist aus der WO 2006/037564 A1 eine gattungsgemäße Einrichtung bekannt, bei der die aus einem Druckluftspeicher entnommene Druckluft auch unmittelbar vor das Einlassventil eines Zylinders der Brennkraftmaschine zugeführt werden kann.

Weiter ist aus der FR 2 689 180 eine Brennkraftmaschine mit einem mechanischen Luftkompressor bekannt.

Da das Zusammenwirken einer gattungsgemäßen Einrichtung zur Versorgung einer turboaufgeladenen Brennkraftmaschine mit zusätzlicher Druckluft gemäß der WO 2006/089779 A1 und der WO 2006/089780 A1 mit anderen Einrichtungen im Fahrzeugantriebsstrang recht komplex ist, bedarf es zur optimalen Verwendung einer solchen Einrichtung in einem Kraftfahrzeug, ob nun Nutzfahrzeug oder Personenfahrzeug, spezieller Steuerungsverfahren, welche die jeweiligen Eigenarten sowie Anforderungen auch dieser Antriebstrangkomponenten berücksichtigen. Dem Anfahrvorgang eines derart ausgestatteten Fahrzeugs mit einer Anfahr- und Schaltkupplung kommt dabei eine besondere Bedeutung zu.

Der Erfindung liegt daher die Aufgabe zugrunde, ein Verfahren zum aufeinander abgestimmten Steuern einer Einrichtung zum Einblasen von zusätzlicher Druckluft in einen Luftansaugtrakt der Brennkraftmaschine sowie einer Anfahr- und Schaltkupplung vorzustellen.

Die Lösung dieser Aufgabe ergibt sich aus den Merkmalen des Hauptanspruchs, während vorteilhafte Weiterbildungen und Ausgestaltungen des Verfahrens gemäß der Erfindung den Unteransprüchen entnehmbar sind.

Der Erfindung liegt die Erkenntnis zugrunde, dass es zur optimalen Steuerung einer an sich bekannten Einrichtung zur Versorgung einer turboaufgeladenen Brennkraftmaschine mit zusätzlicher Druckluft notwendig ist, auch das Betriebsverhalten anderer in einem Fahrzeugantriebstrang vorhandener Einrichtungen und/oder Aggregate mit zu berücksichtigen. Die vorliegende Erfindung beschäftigt sich daher mit dem betriebsoptimalen Zusammenwirken einer Anfahr- und Schaltkupplung mit einer Einrichtung zur Versorgung einer turboaufgeladenen Brennkraftmaschine mit zusätzlicher Druckluft.

Unter dem Begriff "Getriebe" werden alle Arten von Getrieben verstanden, also beispielsweise Handschaltgetriebe, automatisierte Schaltgetriebe, Lastschaltgetriebe, Doppelkupplungsgetriebe, Stufenautomatgetriebe und auch stufenlos schaltende Getriebe.

Unter dem Begriff "Einrichtung zum Einblasen von zusätzlicher Druckluft in einen Luftansaugtrakt der Brennkraftmaschine" werden die eingangs geschilderten Einrichtungen verstanden, unabhängig davon, ob die Druckluft bzw. das Frischgas aus einem Druckluftbehälter eines Druckluftbremssystems oder einer anderen Fahrzeugeinrichtung entnommen wird, oder ob die Druckluft bedarfgerecht unmittelbar von einer elektromotorisch betriebenen Luftpumpe erzeugt wird. Die genannte Einrichtung umfasst alle zu deren Betrieb notwendigen Bauteile und Aggregate.

Zudem ist die Erfindung für alle Einrichtungen zur Versorgung der turboaufgeladenen Brennkraftmaschine mit Druckluft geeignet, unabhängig davon, ob die Druckluft weit vor den Zylindern der Brennkraftmaschine in deren Ansaugtrakt eingeblasen wird, oder ob diese unmittelbar vor dem Einlassventil eines solchen Zylinders in den Einlassbereich desselben eingedüst wird.

Die Erfindung geht daher aus von einem Verfahren zum Betreiben eines Fahrzeugantriebsstranges mit einer Brennkraftmaschine, mit einem dieser Brennkraftmaschine zugeordneten Turbolader, mit einer Einrichtung zum Einblasen von zusätzlicher Druckluft in einen Luftansaugtrakt der Brennkraftmaschine, mit einer Anfahr- und Schaltkupplung sowie mit einem Getriebe. Zur Vorbereitung und Durchführung eines Anfahrvorgangs ist vorgesehen, dass nur dann zusätzliche Druckluft in einen Luftansaugtrakt der Brennkraftmaschine eingeblasen wird, wenn dies in Abhängigkeit von der aktuellen Betriebssituation des Fahrzeugs für die Sicherheit des Fahrers, den Kraftstoffverbrauch und/oder den Fahrkomfort und den Kupplungsverschleiss zu einem vorteilhaften Betriebsverhalten des Fahrzeugs führt.

Durch eine solche Betriebsweise der Einrichtung zum Einblasen von zusätzlicher Druckluft in einen Luftansaugtrakt der Brennkraftmaschine wird sichergestellt, dass deren unbestreitbare Vorteile im Zusammenwirken mit anderen Fahrzeugkomponenten nicht kontraproduktiv wirken.

So sieht eine Weiterbildung der Erfindung vor, dass bei einem Anfahrvorgang eine koordinierte Betätigung der Anfahr- und Schaltkupplung und der Einrichtung zum Einblasen von zusätzlicher Druckluft in den Luftansaugtrakt der Brennkraftmaschine derart erfolgt, dass die Stellgeschwindigkeit oder das dynamische Verhalten eines Kupplungsaktuators sowie der Zeitpunkt, der Druck und die Dauer des Einblasens von zusätzlicher Druckluft aufeinander abgestimmt erfolgen. Diese Verfahrensweise sorgt dafür, dass die durch die Einblaseinrichtung initiierbare Steigerung des Motordrehmomentes zeitlich genau dann erfolgt, wenn dies für den Anfahrvorgang auch wünschenswert ist. Dabei ist zu bedenken, dass die Anfahr- und Schaltkupplung ja auch mit dem Fahrzeuggetriebe und dessen Anforderungen bei einem Anfahrvorgang zusammenwirkt.

In weiterer Ausgestaltung der Erfindung kann vorgesehen sein, dass die koordinierte Betätigung der Anfahr- und Schaltkupplung und der Einrichtung zum Einblasen von zusätzlicher Druckluft in Abhängigkeit von der Fahrzeugmasse M, dem Fahrwiderstand Fw, der Fahrbahnneigung α, dem bevorstehenden Streckenverlauf GPS, der Umgebungstemperatur T, dem vom Fahrer erwarteten oder zuvor festgelegten und in einem Steuergerät abgespeicherten oder berechneten Anfahrzeitraum, dem Leistungswunsch L des Fahrers und/oder dem dynamischen Verhalten der Einrichtung zum Einblasen von zusätzlicher Druckluft und des Kupplungsaktuators gesteuert wird. Die genannten Größen werden bei der Durchführung des Verfahrens in an sich bekannter Weise durch geeignete Sensoren gemessen und einem geeigneten Steuergerät zugeführt, oder in diesem oder einem anderen Steuergerät des Fahrzeugs berechnet.

Eine Auswertung der genannten Größen kann zu der automatisierten Entscheidung führen, dass die Einrichtung zum Einblasen von zusätzlicher Druckluft bei einem Anfahrvorgang gezielt nicht aktiviert und der Anfahrvorgang mit einem Schließen der Anfahr- und Schaltkupplung nur im reinen Saugbetrieb der Brennkraftmaschine bzw. mit Unterstützung des Abgasturboladers bei höheren Motordrehzahlen durchgeführt wird. Ein solcher Betriebsfall kann beispielsweise dann vorliegen, wenn das vom Fahrer angeforderte Motordrehmoment kleiner oder gleich ist wie das Motordrehmoment im anfänglich reinen Saugbetrieb der Brennkraftmaschine. Der Begriff des "anfänglich reinen Saugbetriebes" soll verdeutlichen, dass selbstverständlich auch bei einem Anfahrvorgang bei späteren höheren Drehzahlen der Brennkraftmaschine die Wirkung des Abgasturboladers einsetzt.

Weiter kann vorgesehen sein, dass bei einem Anfahrvorgang ein Einblasen von zusätzlicher Druckluft in den Luftansaugtrakt der Brennkraftmaschine sofort erfolgt, wenn aufgrund von Streckeninformationen über den voraus liegenden Fahrweg klar ist, dass das Fahrzeug an einer Steigung anzufahren ist oder eine solche Steigung in der Fahrstrecke unmittelbar bevorsteht. Dadurch wird dem bei einem Anfahren an einer Steigung erhöhten Fahrwiderstand durch eine unmittelbare Erhöhung des Motordrehmoments durch Einblasen von zusätzlicher Druckluft sowie einer daran natürlich angepassten Kraftstoffmenge begegnet.

Gemäß einer anderen Variante ist vorgesehen, dass vor einem Anfahrvorgang ein Druckluftkompressor zur Erzeugung der benötigten Druckluft sofort gestartet wird, wenn aufgrund von Streckeninformationen über den voraus liegenden Fahrweg klar ist, dass das Fahrzeug an einer Steigung anzufahren ist oder eine solche Steigung in der Fahrstrecke unmittelbar bevorsteht, sowie ein im Fahrzeug angeordneter Druckluftbehälter einen vorbestimmten unteren Befüllzustand unterschreitet. Durch diese vorausschauende Verfahrensweise wird erreicht, dass vor Steigungen der Druckluftbehälter immer ausreichend gefüllt ist, um eine Drucklufteinblasung in den Ansaugtrakt der Brennkraftmaschine zu dessen Drehmomentanhebung zu ermöglichen.

Weiter wird es als vorteilhaft erachtet, wenn vorgesehen ist, dass ein Einblasen von zusätzlicher Druckluft in den Luftansaugtrakt der Brennkraftmaschine bei einem Anfahrvorgang derart erfolgt, dass durch ein erhöhtes Motordrehmoment die Schlupfzeit der Anfahr- und Schaltkupplung sowie die Anfahrdrehzahl der Brennkraftmaschine reduziert wird. Durch diese Betriebsweise wird die Gebrauchsdauer der Reibbeläge der Anfahr- und Schaltkupplung vorteilhaft erhöht sowie gegebenenfalls Kraftstoff gespart bzw. ein besseres Abgasverhalten der Brennkraftmaschine erreicht.

Zudem kann gemäß der Erfindung vorgesehen sein, dass ein Einblasen von zusätzlicher Druckluft in den Luftansaugtrakt der Brennkraftmaschine bei einem Anfahrvorgang derart erfolgt, dass beim Anlassen der Brennkraftmaschine mittels eines Anlassers dieser durch anfänglich hohe Gasdrücke im Brennraum der Brennkraftmaschine entlastet wird. Diese anfänglich hohen Gasdrücke im Brennraum der Brennkraftmaschine werden dabei durch diejenige Druckluft mit erzeugt, die in diesem Fall bevorzugt unmittelbar auf die Einlassventile der Brennkraftmaschine geblasen werden.

Außerdem kann ein derart ausgestattetes Kraftfahrzeug im Sinne der Erfindung so betrieben werden, dass das Einblasen von zusätzlicher Druckluft in den Luftansaugtrakt der Brennkraftmaschine von einem Antiblockiersystem, einem Antriebsschlupfregelungssystem, einem Wankstabilisierungsprogramm, einem Off-Road-Programm und/oder von einem Abstandsregelprogramm in Abhängigkeit von sicherheitsrelevanten Entscheidungskriterien aktiviert oder deaktiviert wird. Dazu sind die zu den einzelnen Sicherheitsfunktionen gehörenden Steuergeräte sowie das Steuergerät für die Kupplungssteuerung sowie für die Einblaseinrichtung informationstechnisch miteinander vernetzt, so dass eine durch andere Steuerungsfunktionen an sich vorgesehene Einblasung von zusätzlicher Druckluft in den Ansaugtrakt der Brennkraftmaschine unterbunden oder sogar abgebrochen wird, wenn sicherheitsrelevante Kriterien dies bewirken.

Schließlich kann in weiterer Ausgestaltung der Erfindung vorgesehen sein, dass das Einblasen von zusätzlicher Druckluft in den Luftansaugtrakt der Brennkraftmaschine von dem Fahrer manuell aktiviert oder deaktiviert werden kann. Dadurch hat dieser unter Wahrung aller Vorsichtsmaßnahmen die Möglichkeit, eine von einem der genannten Steuergeräte vorgesehene oder unterbundene Einblasung von zusätzlicher Druckluft in den Ansaugtrakt der Brennkraftmaschine zu übersteuern, also einen anderen diesbezüglichen Steuerungsablauf einzuleiten. Um dies zu ermöglichen stehen dem Fahrer in seiner Fahrerkabine diesbezügliche Anzeige- und Betätigungsmittel zur Verfügung, die mit zumindest einem der genannten relevanten Steuergeräten verbunden sind. Dadurch kann der Fahrer bei einer Fehlfunktion der Sensoren oder Steuergeräte dennoch den sowohl fahrtechnisch als auch sicherheitstechnisch sinnvollen Ablauf eines gegebenenfalls druckluftunterstützten Anfahrvorgangs steuern.

Die Erfindung wird nachfolgend ausführlich anhand eines Ausführungsbeispiels erläutert. Dazu ist der Beschreibung eine Zeichnungsfigur beigefügt. In dieser zeigt
- Fig. 1: eine schematische Darstellung eines Fahrzeugantriebsstrangs mit einer Einrichtung zum Einblasen von Druckluft in den Ansaugtrakt einer Brennkraftmaschine und
- Fig. 2: ein Blockdiagramm hinsichtlich der informationstechnischen Vernetzung von Sensoren, Steuergeräten und Anzeige- sowie Eingabeeinrichtungen des Antriebsstrangs gemäß Fig. 1.

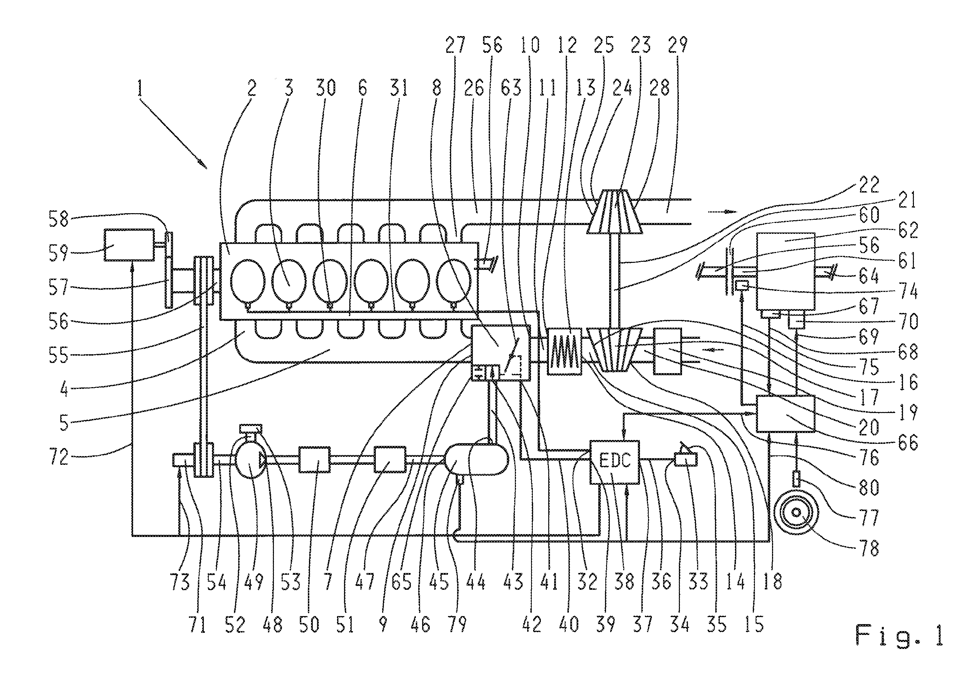

Zu dem in Fig. 1 dargestellten Fahrzeugantriebsstrang 1 gehört ein mit einem Turbokompressor 17 ausgestatteter Dieselmotor 2 mit sechs in einer Reihe im Zylinderblock 6 angeordneten Zylindern 3. Die Saugleitungen 4 der Zylinder 3 sind an einer Sammelleitung 5 angeschlossen, welche einen Anschlussflansch 7 aufweist, woran ein Luftansaugtrakt 8 mit seinem zweiten Endanschluss 9 zum Ausströmen von Luft angeschlossen ist. Der erste Endanschluss 10 zum Einströmen von Luft ist durch eine Leitung 11 mit der Ausströmöffnung 12 eines Ladeluftkühlers 13 gekoppelt, deren Einströmöffnung 14 durch eine Leitung 15 mit der Ausströmöffnung 16 des Turbokompressors 17 gekoppelt ist. An die Einströmöffnung 18 des Turbokompressors 17 ist ein Luftfilter 19 mit einer Leitung 20 angeschlossen. Der Turbokompressor 17 bildet einen Teil des Turboladers 22, deren Abgasturbine 23 mit seiner Einströmöffnung 24 an die Ausströmöffnung 25 des Auspuffsammelrohrs 26 angeschlossen ist. Der Turbokompressor 17 und die Abgasturbine 23 sind an einer drehbar gelagerten Welle 21 befestigt. Die Zylinder 3 sind durch Auspuffleitungen 27 an das Auspuffsammelrohr 26 angeschlossen und die Ausströmöffnung 28 der Abgasturbine 23 ist mit dem Abgasrohr 29 strömungswirksam verbunden.

Die Kraftstoffversorgung der Zylinder 3 erfolgt über Einspritzdüsen 30, deren Regelung durch die Leitung 31 vom ersten Ausgang 32 der elektronischen Steuereinheit (EDC) 38 durchgeführt wird. An den Eingang 37 der elektronischen Steuereinheit 38 ist der Ausgang 34 der elektronischen Steuereinheit 33 durch die Leitung 36 angeschlossen. Diese zuletzt genannte Steuereinheit 33 ist mit einem Betätigungsorgan versehen, das in diesem Ausführungsbeispiel als Fahrpedal 35 ausgebildet ist. Der elektrische Anschluss 39 der elektronischen Steuereinheit 38 ist durch die Sammelleitung 40 mit dem elektrischen Anschluss 41 des Luftansaugtrakts 8 gekoppelt. Die gestrichelte Steuerleitung an dem Luftansaugtrakt 8 verdeutlicht, dass die elektronische Steuereinheit 38 einen nicht dargestellten Stellmotor zur Betätigung der Drosselklappe 63 ansteuert. Mit dieser Drosselklappe 63 ist die von dem Dieselmotor 2 ansaugbare Luftmenge einstellbar.

Der Luftansaugtrakt 8 besitzt einen Druckluftanschluss 42, der durch die Leitung 43 an den Auslassanschluss 44 eines Druckluftbehälters 45 angeschlossen ist. Der Speiseanschluss 46 des Druckluftbehälters 45 ist durch die Leitung 47 an den Druckluftanschluss 48 eines Druckluftkompressors 49 angeschlossen. In die Leitung 47 sind auch ein Druckregler 50 und ein Lufttrockner 51 eingebaut. Der Druckluftkompressor 49 besitzt einen Saugstutzen 52, der mit einem Luftfilter 53 versehen ist. Die Welle 54 des Druckluftkompressors 49 ist durch einen Riemenantrieb 55 mit der Hauptwelle 56 des turboaufgeladenen Dieselmotors 2 verbunden. Die Erfindung erfasst aber auch solche Druckluftkompressoren, die von einem durch beispielsweise die elektronische Steuereinheit 38 ansteuerbare Elektromotor angetrieben werden (nicht dargestellt).

Weiter zeigt Fig. 1, dass der Druckluftkompressor 49 über eine von dem genannten elektronischen Steuergerät 38 über eine Steuerleitung 73 ansteuerbare Kupplung 71 mit dem Riementrieb 55 an der Brennkraftmaschine 2 verbindbar ist, so dass dieser Druckluftkompressor 49 nur dann von dem Steuergerät 38 aktiviert wird, wenn der Druck im Druckluftbehälter 45 aufgefüllt werden muss. Zur Ermittlung des aktuellen Drucks in dem Druckbehälter 45 ist dort ein Drucksensor 79 angeordnet, dessen Messsignal über eine Sensorleitung 80 an das Steuergerät 38 und/oder an das Getriebesteuergerät 66 leitbar ist.

Die Aktivierung des Druckluftkompressors 49 erfolgt gemäß der Erfindung beispielsweise dann sehr vorteilhaft, wenn sich das Fahrzeug im Schubbetrieb an einem Hang befindet, um durch die Leistungsaufnahme des Druckluftkompressors 49 die Bremswirkung des Antriebsstrangs 1 zu nutzen.

Überdies zeigt Fig. 1, dass die Brennkraftmaschine 2 von einem elektromotorischen Anlasser 59 antreibbar und damit startbar ist, der mit seinem Ritzel 58 in einen Zahnkranz 57 der Schwungscheibe der Brennkraftmaschine 2 eingreifen kann. Die Schwungscheibe ist mit dem Zahnkranz 57 in bekannter Weise an der Hauptwelle 56 der Brennkraftmaschine 2 befestigt. Der Anlasser 59 ist über eine Steuerleitung 72 mit dem elektronischen Steuergerät 38 der Einblaseinrichtung für zusätzliche Druckluft verbunden und durch dieses Steuergerät 38 daher ein- und ausschaltbar.

Außerdem ist ein von der elektronischen Steuereinheit 38 ansteuerbares elektromagnetisches Steuer- und Regelventil 65 in der Leitung 43 angeordnet, mit dem ein Eindüsen oder Einblasen von zusätzlicher Druckluft aus dem Druckluftbehälter 45 in den Luftansaugtrakt 8 möglich ist, wenn dies zur Beeinflussung, insbesondere zur Anhebung des Drehmoments des Dieselmotors 2 sinnvoll erscheint. Das Steuerventil 65 wird von dem elektronischen Steuergerät 38 über die Sammelleitung 40 angesteuert, die sich im Bereich des Luftansaugtraktes 8 in eine Steuerleitung (klein gestrichelt gezeichnet) zur Ansteuerung des Stellmotors der Drosselklappe 63 und in eine Steuerleitung (groß gestrichelt gezeichnet) zur Ansteuerung des Steuerventils 63 aufzweigt.

Ferner zeigt Fig. 1 schematisch, dass die Brennkraftmaschine 2 abtriebsseitig über deren Hauptwelle 56 mit der Eingangsseite einer Anfahr- und Schaltkupplung 60 drehfest verbunden ist, während die Ausgangsseite dieser Anfahrkupplung 60 mit der Getriebeeingangswelle 61 eines Automatgetriebes 62 gekoppelt ist. Die Anfahrkupplung 60 ist als eine automatisiert betätigbare Kupplung ausgebildet und daher mit einem Kupplungsaktuator 74 ausgestattet, der über eine Steuerleitung 75 mit einem Getriebesteuergerät 66 verbunden ist und von diesem befehligt wird.

Sofern es das Betriebsverhalten der dieselmotorischen Brennkraftmaschine 2 erfordert, kann eingangsseitig vor der Anfahrkupplung 60 auch noch ein hier nicht dargestellter Drehschwingungsdämpfer angeordnet sein, welches jedoch an sich bekannt ist. Das Automatgetriebe 62 verfügt über eine Ausgangswelle, die über nicht gezeigte Antriebswellen und ein Differentialgetriebe mit den Fahrzeugrädern 78 verbunden ist.

Das Automatgetriebe 62 ist im vorliegenden Ausführungsbeispiel als automatisiertes Schaltgetriebe ausgebildet, dessen bekannte Gangaktuatoren 70 über Steuerleitungen 69 mit dem Getriebesteuergerät 66 verbunden sind. Mit Hilfe dieser Gangaktuatoren 70 können in bekannter Weise Getriebegänge ein- und ausgelegt bzw. ganz allgemein Übersetzungsänderungen durchgeführt werden. Das Getriebesteuergerät 66 ist zudem über Sensorleitungen 68 mit Sensoren am Getriebe 62 verbunden, mittels denen das Getriebesteuergerät 66 schaltrelevante Informationen ermittelt. Bei solchen Informationen handelt es sich zunächst um die Drehzahlen der Getriebeeingangswelle 61 und der Getriebeausgangswelle 64 sowie um Weg- und/oder Positionssignale der Gangaktuatoren 70. Außerdem wird von dem Getriebesteuergerät 66 und/oder dem Steuergerät 38 mit Hilfe eines Drehzahlsensors 77 an der Getriebeabtriebswelle 64 oder einem Fahrzeugrad 78 die Fahrzeuggeschwindigkeit sowie mit einem nicht dargestellten Drehzahlsensor an der Hauptwelle 56 der Brennkraftmaschine 2 die Motordrehzahl ermittelt. Auf der Grundlage dieser sowie anderer Informationen werden die Vorgänge zur Übersetzungsänderung im Automatgetriebe 62 vorbereitet und durchgeführt.

Der Antriebsstrang 1 funktioniert hinsichtlich der Basisfunktionen der Einrichtung 8 zur Frischluftversorgung des Dieselmotors 2 zunächst wie folgt:
Die Zylinder 3 des turboaufgeladenen Dieselmotors 2 werden mit Frischgas durch die Saugleitungen 4, die Sammelleitung 5, den Luftansaugtrakt 8, die Leitung 11, den Ladeluftkühler 13, die Leitung 15, den Turbokompressor 17 und den Luftfilter 19 gespeist, wenn die Motordrehzahl konstant ist. Die Abgase verlassen die Zylinder 3 durch die Auspuffleitungen 27, das Auspuffsammelrohr 26, die Abgasturbine 23 und das Abgasrohr 29.

Wenn der Fahrer das Fahrpedal 35 schnell nieder drückt, damit das Motordrehmoment bzw. die Motordrehzahl rasch erhöht werden soll, benötigt der Dieselmotor 2 mehr Kraftstoff und mehr Frischgas bzw. Luft als kurz zuvor. Der zusätzliche Kraftstoff wird in die Zylinder 3 geführt, aber die Erhöhung der Frischgasmenge, die vom Turbolader 22 geliefert wird, bleibt unzureichend. Zudem ist bei geringen Motordrehzahlen der Druck des Frischgases im Ansaugtrakt 8 niedrig, der im Innenraum ständig durch einen nicht dargestellten Drucksensor ermittelt und zur elektronischen Steuereinheit 38 geleitet wird. In diesem Betriebszustand ist die Drosselklappe 63 voll geöffnet. Die elektronische Steuereinheit 38 stellt sodann mit Hilfe eines Steuerungsprogramms fest, dass sich der Druck im Innenraum des Luftansaugtrakts 8 nicht genügend schnell erhöht und eine zusätzliche Lufteinblasung durchgeführt werden soll.

Das Steuerungsprogramm hat vorbestimmte Angaben über die Bedingungen, wann die zusätzliche Lufteinblasung zu beginnen hat. Zum Beginn wird die Drosselklappe 63 in Richtung Schließen verstellt und die Drucklufteinblasung durch Öffnen des Ventils 65 von dem Druckluftbehälter 45 in den Luftansaugtrakt 8 frei gegeben. Die Dauer der Lufteinblasung wird ebenfalls vom Steuerungsprogramm vorgegeben, das die Druckdifferenz und den absoluten Druck in dem Luftansaugtrakt 8 berücksichtigt.

Durch das Steuerungsprogramm soll zunächst verhindert werden, dass der Druckluftverbrauch vom Druckluftbehälter 45 so hoch ist, dass die Bremssicherheit eines an den Druckluftbehälter 45 angeschlossenen Druckluftbremssystems negativ beeinflusst wird.

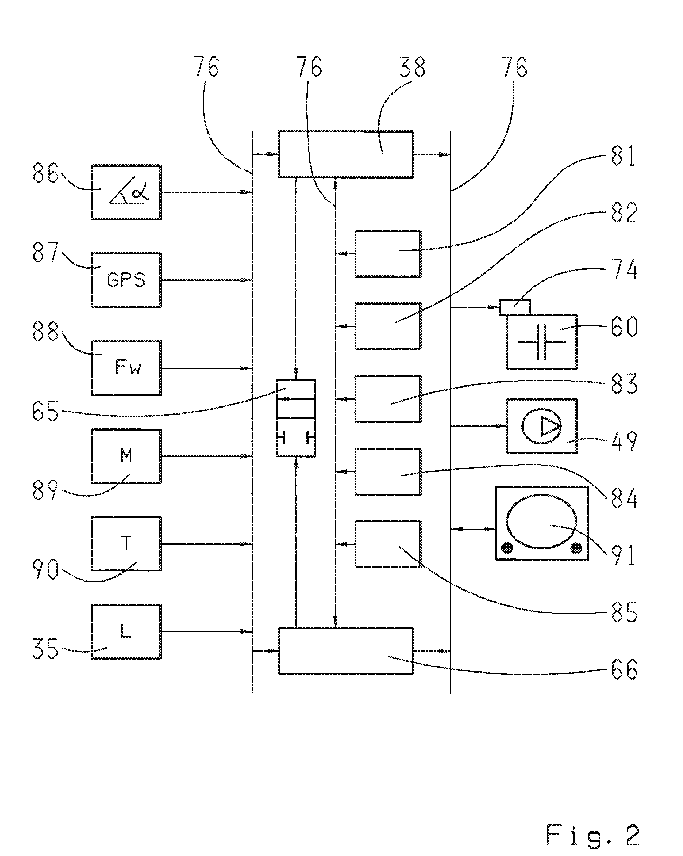

Weiter ist in den Fig. 1 und 2 erkennbar, dass das Getriebesteuergerät 66 über die Datenleitung 76 des CAN-Bus-Systems mit dem Steuergerät 38 der Einrichtung zum Einblasen von zusätzlicher Druckluft verbunden ist, wobei letzteres auch als Motorsteuergerät bezeichnet werden kann. Zwischen diesen beiden Steuergeräten 38, 66 findet gemäß der Erfindung ständig ein Informationsaustausch darüber statt, ob und wenn ja wann sowie in welchem Umfang ein Einblasen von zusätzlicher Druckluft in den Ansaugtrakt 8 der Brennkraftmaschine 2 zur Anhebung des Motordrehmoments und zur Unterstützung einer Getriebeschaltung erfolgen kann und/oder erfolgen soll.

Erst durch diesen Informationsaustausch sind Anfahrvorgänge mit der Anfahr- und Schaltkupplung 60 sowie die Übersetzungsänderungsvorgänge bzw. Gangschaltvorgänge im Automatgetriebe 62 sinnvoll in einem Fahrzeug durchführbar, in dem eine solche Einrichtung zum Einblasen von zusätzlicher Druckluft in den Luftansaugtrakt 8 der Brennkraftmaschine 2 implementiert ist. Zudem ermöglicht die exakte Koordinierung der Steuerung des Einblasens von zusätzlicher Druckluft in den Ansaugtrakt 8 der Brennkraftmaschine 2 zur Vorbereitung und Durchführung von Übersetzungsänderungsvorgängen im Automatgetriebe 2 sehr vorteilhaft Betriebsweisen des Fahrzeugantriebsstrangs 1, welches so bisher nicht möglich war und worauf weiter vorne bereits eingegangen wurde.

Vor diesem Hintergrund kommt dem Anfahrvorgang eines derart ausgestatteten Fahrzeugs eine besondere Bedeutung zu, da dieser üblicherweise mir so geringen Motordrehzahlen beginnt, dass eine Motordrehmomentanhebung durch die Wirkung des Abgasturboladers 22 noch nicht eintritt. Dies ist vor allem dann ungünstig, wenn beispielsweise ein schwach motorisiertes Personenfahrzeug oder ein schwer beladenes Nutzfahrzeug am Hang angefahren werden soll. Zudem gibt es noch andere, auch sicherheitsrelevante Randbedingungen, die ein koordiniertes Zusammenwirken der Anfahr- und Schaltkupplung 60 mit dem Steuergerät 38 zur Steuerung des Einblasens von Druckluft in den Ansaugtrakt 8 der Brennkraftmaschine 2 erfordern.

Die Erfindung sieht hierzu vor, dass nur dann zusätzliche Druckluft in einen Luftansaugtrakt 8 der Brennkraftmaschine 2 eingeblasen wird, wenn dies in Abhängigkeit von der aktuellen Betriebssituation des Fahrzeugs für die Sicherheit des Fahrers, den Kraftstoffverbrauch und/oder den Fahrkomfort und den Kupplungsverschleiss zu einem vorteilhaften Betriebsverhalten des Fahrzeugs führt.

Insbesondere kann dazu vorgesehen sein, dass bei einem Anfahrvorgang die koordinierte Betätigung der Anfahr- und Schaltkupplung 60 und der Einrichtung zum Einblasen von zusätzlicher Druckluft in den Luftansaugtrakt 8 der Brennkraftmaschine 2 derart erfolgt, dass die Stellgeschwindigkeit oder das dynamische Verhalten eines Kupplungsaktuators 74 sowie der Zeitpunkt, der Druck und die Dauer des Einblasens von zusätzlicher Druckluft aufeinander abgestimmt erfolgen.

Wie Fig. 2 veranschaulicht, ist es von Vorteil, wenn die koordinierte Betätigung der Anfahr- und Schaltkupplung 60 und der Einrichtung zum Einblasen von zusätzlicher Druckluft durch Verstellen des Steuerventils 65 in Abhängigkeit von der Fahrzeugmasse M, dem Fahrwiderstand Fw, der Fahrbahnneigung α, dem bevorstehenden Streckenverlauf GPS, der Umgebungstemperatur T, dem vom Fahrer erwarteten oder zuvor festgelegten und in einem Steuergerät 38, 66 abgespeicherten oder berechneten Anfahrzeitraum, dem Leistungswunsch L des Fahrers und/oder dem dynamischen Verhalten der Einrichtung zum Einblasen von zusätzlicher Druckluft und des Kupplungsaktuators 74 gesteuert wird.

Dabei können die genannten Streckeninformationen GPS von einem satellitengestützten Navigationssystem 87 stammen, während die Werte für die Fahrzeugmasse M von einem Fahrzeugmassesensor 89, die Umgebungstemperatur T von einem Temperatursensor 90, die Fahrbahnneigung α von einem Neigungssensor 86 oder dem Navigationssystem 87, der Leistungswunsch L des Fahrers von einem Stellwinkelsensor am Fahrpedal 35 und der aktuelle Fahrwiderstand Fw von einem Fahrwiderstandsermittlungsprogramm 88 stammen.

Die genannten Betriebsbedingungen werden in dem CAN-Bus-System (Leitung 76) den beiden Steuergeräten 38 für die Drucklufteinblasung und 66 für die Getriebe- und Kupplungssteuerung zur Verfügung gestellt, die das Steuerventil 65 der Einblaseinrichtung zu dessen Betätigung ansteuern können. Wie Fig. 2 zeigt, stehen auch andere Steuergeräte 81 bis 85 über den CAN-Bus mit den beiden Steuergeräten 38 und 66 ebenso in Verbindung wie der Aktuator 74 der Anfahr- und Schaltkupplung 60, der Druckluftkompressor 49 und eine Anzeige- sowie Einstelleinrichtung 91 für den Fahrer, worauf weiter unten noch eingegangen wird.

Hinsichtlich eines optimalen Betriebs des Antriebsstrangs 1 ist gemäß der Erfindung zudem vorgesehen, dass die Einrichtung zum Einblasen von zusätzlicher Druckluft bei einem Anfahrvorgang gezielt nicht aktiviert wird, wenn das vom Fahrer angeforderte Motordrehmoment kleiner oder gleich ist wie das Motordrehmoment im anfänglich reinen Saugbetrieb der Brennkraftmaschine 2.

Weiter wird es als vorteilhaft beurteilt, wenn vorgesehen ist, dass bei einem Anfahrvorgang ein Einblasen von zusätzlicher Druckluft in den Luftansaugtrakt 8 der Brennkraftmaschine 2 dann sofort erfolgt, wenn aufgrund von Streckeninformationen (GPS) klar ist, dass das Fahrzeug an einer Steigung anzufahren ist oder eine solche Steigung in der Fahrstrecke unmittelbar bevorsteht.

Weiter kann eine Betriebsweise derart vorgesehen sein, dass vor einem Anfahrvorgang ein Druckluftkompressors 49 zur Erzeugung der benötigten Druckluft sofort gestartet wird, wenn aufgrund von Streckeninformationen (GPS) klar ist, dass das Fahrzeug an einer Steigung anzufahren ist oder eine solche Steigung in der Fahrstrecke unmittelbar bevorsteht, sowie ein Druckluftbehälter 45 einen vorbestimmten unteren Befüllzustand unterschreitet.

Zudem kann ein Einblasen von zusätzlicher Druckluft in den Luftansaugtrakt 8 der Brennkraftmaschine 2 bei einem Anfahrvorgang derart erfolgen, dass durch ein erhöhtes Motordrehmoment die Schlupfzeit der Anfahr- und Schaltkupplung 60 sowie die Anfahrdrehzahl der Brennkraftmaschine 2 reduziert wird.

Außerdem kann der Antriebsstrang 1 und die Steuerungseinrichtung gemäß Fig. 2 so betrieben werden, dass ein Einblasen von zusätzlicher Druckluft in den Luftansaugtrakt 8 der Brennkraftmaschine 2 bei einem Anfahrvorgang derart erfolgt, dass beim Anlassen der Brennkraftmaschine 2 mittels eines Anlassers 59 dieser durch anfänglich hohe Gasdrücke im Brennraum der Brennkraftmaschine 2 entlastet wird.

Weiter kann das erfindungsgemäße Verfahren so weitergebildet sein, dass das Einblasen von zusätzlicher Druckluft in den Luftansaugtrakt 8 der Brennkraftmaschine 2 von einem Antiblockiersystem 81, einem Antriebsschlupfregelungssystem 82, einem Wankstabilisierungsprogramm 83, einem Off-Road-Programm 84 und/oder von einem Abstandsregelprogramm 85 in Abhängigkeit von sicherheitsrelevanten Entscheidungskriterien aktiviert oder deaktiviert wird.

Schließlich zeigt Fig. 2 anhand der Eingabe- und Anzeigeeinrichtung 91, dass das Einblasen von zusätzlicher Druckluft in den Luftansaugtrakt 8 der Brennkraftmaschine 2 von dem Fahrer manuell aktiviert oder deaktiviert werden kann, wenn er dazu berechtigten Anlass hat.

### Bezugszeichen

- 1: Fahrzeugantriebsstrang
- 2: Brennkraftmaschine, Dieselmotor
- 3: Zylinder
- 4: Saugleitung
- 5: Sammelleitung
- 6: Zylinderblock
- 7: Anschlussflansch
- 8: Luftansaugtrakt
- 9: Zweiter Endanschluss, Ausströmbereich
- 10: Erster Endanschluss, Einströmbereich
- 11: Leitung
- 12: Ausströmöffnung
- 13: Ladeluftkühler
- 14: Einströmöffnung
- 15: Leitung
- 16: Ausströmöffnung
- 17: Turbokompressor
- 18: Einströmöffnung
- 19: Luftfilter
- 20: Leitung
- 21: Welle
- 22: Turbolader, Abgasturbolader
- 23: Abgasturbine
- 24: Einströmöffnung
- 25: Ausströmöffnung
- 26: Auspuffsammelrohr
- 27: Auspuffleitung
- 28: Ausströmöffnung
- 29: Abgasrohr
- 30: Einspritzdüse
- 31: Leitung
- 32: Ausgang
- 33: Steuereinheit
- 34: Ausgang
- 35: Fahrpedal
- 36: Leitung
- 37: Eingang
- 38: Elektronische Steuereinheit
- 39: Anschluss
- 40: Sammelleitung
- 41: Anschluss
- 42: Druckluftanschluss
- 43: Leitung
- 44: Auslassanschluss
- 45: Druckluftbehälter
- 46: Speiseanschluss
- 47: Leitung
- 48: Druckluftanschluss
- 49: Druckluftkompressor
- 50: Druckregler
- 51: Lufttrockner
- 52: Saugstutzen
- 53: Luftfilter
- 54: Welle
- 55: Riemenantrieb
- 56: Hauptwelle
- 57: Zahnkranz
- 58: Ritzel des Anlassers
- 59: Anlasser
- 60: Anfahr- und Schaltkupplung
- 61: Getriebeeingangswelle
- 62: Getriebe, Automatgetriebe
- 63: Drosselklappe
- 64: Getriebeausgangswelle
- 65: Steuer- und Regelventil
- 66: Getriebesteuergerät
- 67: Sensor am Getriebe
- 68: Sensorleitung
- 69: Steuerleitung zum Getriebeaktuator 70
- 70: Aktuator am Getriebe
- 71: Aktuator an der Kupplung des Druckluftkompressors
- 72: Steuerleitung zum Anlasser
- 73: Steuerleitung zum Aktuator 71
- 74: Kupplungsaktuator
- 75: Steuerleitung zum Kupplungsaktuator
- 76: Datenleitung, CAN-Bus
- 77: Drehzahlsensor
- 78: Fahrzeugrad
- 79: Drucksensor
- 80: Sensorleitung
- 81: Steuergerät, ABS
- 82: Steuergerät, ESP
- 83: Steuergerät, Wankstabilisierung
- 84: Off-Road-Programm
- 85: Abstandsregelprogramm
- 86: Neigungssensor
- 87: Navigationssystem, GPS
- 88: Fahrwiderstandermittlungsprogramm
- 89: Fahrzeugmasse-Sensor
- 90: Temperatur-Sensor
- 91: Eingabe- und Anzeigeeinrichtung
- α: Fahrbahnneigung
- Fw: Fahrwiderstand
- GPS: Streckeninformation, Streckenverlauf
- L: Leistungswunsch des Fahrers
- M: Fahrzeugmasse
- T: Umgebungstemperatur

## Patentansprüche

1. Verfahren zum Betreiben eines Fahrzeugantriebsstranges (1) mit einer Brennkraftmaschine (2), mit einem dieser Brennkraftmaschine zugeordneten Turbolader (22), mit einer Einrichtung zum Einblasen von zusätzlicher Druckluft in einen Luftansaugtrakt (8) der Brennkraftmaschine (2), mit einer Anfahr- und Schaltkupplung (60) sowie mit einem Getriebe (62), wobei zur Vorbereitung und Durchführung eines Anfahrvorgangs nur dann zusätzliche Druckluft in einen Luftansaugtrakt (8) der Brennkraftmaschine (2) eingeblasen wird, wenn dies in Abhängigkeit von der aktuellen Betriebssituation des Fahrzeugs für die Sicherheit des Fahrers, den Kraftstoffverbrauch und/oder den Fahrkomfort und den Kupplungsverschleiss zu einem vorteilhaften Betriebsverhalten des Fahrzeugs führt, **dadurch gekennzeichnet, dass** bei dem Anfahrvorgang eine koordinierte Betätigung der Anfahr- und Schaltkupplung (60) und der Einrichtung zum Einblasen von zusätzlicher Druckluft in den Luftansaugtrakt (8) der Brennkraftmaschine (2) derart erfolgt, dass die Stellgeschwindigkeit oder das dynamische Verhalten eines Kupplungsaktuators (74) sowie der Zeitpunkt, der Druck und die Dauer des Einblasens von zusätzlicher Druckluft aufeinander abgestimmt erfolgen.

2. Verfahren nach Anspruch 1, dadurch **gekennzeich**n e t , dass die koordinierte Betätigung der Anfahr- und Schaltkupplung (60) und der Einrichtung zum Einblasen von zusätzlicher Druckluft in Abhängigkeit von der Fahrzeugmasse (M), dem Fahrwiderstand (Fw), der Fahrbahnneigung (α), dem bevorstehenden Streckenverlauf (GPS), der Umgebungstemperatur (T), dem vom Fahrer erwarteten oder zuvor festgelegten und in einem Steuergerät (38, 66) abgespeicherten oder berechneten Anfahrzeitraum, dem Leistungswunsch (L) des Fahrers und/oder dem dynamischen Verhalten der Einrichtung zum Einblasen von zusätzlicher Druckluft und des Kupplungsaktuators (74) gesteuert wird.

3. Verfahren nach einem der vorherigen Ansprüche, **dadurch gekennzeichnet, dass** die Einrichtung zum Einblasen von zusätzlicher Druckluft bei einem Anfahrvorgang gezielt nicht aktiviert wird, wenn das vom Fahrer angeforderte Motordrehmoment kleiner oder gleich ist wie das Motordrehmoment im anfänglich reinen Saugbetrieb der Brennkraftmaschine (2).

4. Verfahren nach einem der vorherigen Ansprüche, **dadurch gekennzeichnet, dass** bei einem Anfahrvorgang ein Einblasen von zusätzlicher Druckluft in den Luftansaugtrakt (8) der Brennkraftmaschine (2) sofort erfolgt, wenn aufgrund von Streckeninformationen (GPS) klar ist, dass das Fahrzeug an einer Steigung anzufahren ist oder eine solche Steigung in der Fahrstrecke unmittelbar bevorsteht.

5. Verfahren nach einem der vorherigen Ansprüche, **dadurch gekennzeichnet, dass** vor einem Anfahrvorgang ein Druckluftkompressor (49) zur Erzeugung der benötigten Druckluft sofort gestartet wird, wenn aufgrund von Streckeninformationen (GPS) klar ist, dass das Fahrzeug an einer Steigung anzufahren ist oder eine solche Steigung in der Fahrstrecke unmittelbar bevorsteht, sowie ein Druckluftbehälter (45) einen vorbestimmten unteren Befüllzustand unterschreitet.

6. Verfahren nach einem der vorherigen Ansprüche, **dadurch gekennzeichnet, dass** ein Einblasen von zusätzlicher Druckluft in den Luftansaugtrakt (8) der Brennkraftmaschine (2) bei einem Anfahrvorgang derart erfolgt, dass durch ein erhöhtes Motordrehmoment die Schlupfzeit der Anfahr- und Schaltkupplung (60) sowie die Anfahrdrehzahl der Brennkraftmaschine (2) reduziert wird.

7. Verfahren nach einem der vorherigen Ansprüche, **dadurch gekennzeichnet, dass** ein Einblasen von zusätzlicher Druckluft in den Luftansaugtrakt (8) der Brennkraftmaschine (2) bei einem Anfahrvorgang derart erfolgt, dass beim Anlassen der Brennkraftmaschine (2) mittels eines Anlassers (59) dieser durch anfänglich hohe Gasdrücke im Brennraum der Brennkraftmaschine (2) entlastet wird.

8. Verfahren nach einem der vorherigen Ansprüche, **dadurch gekennzeichnet, dass** das Einblasen von zusätzlicher Druckluft in den Luftansaugtrakt (8) der Brennkraftmaschine (2) von einem Antiblockiersystem (81), einem Antriebsschlupfregelungssystem (82), einem Wankstabilisierungsprogramm (83), einem Off-Road-Programm (84) und/oder von einem Abstandsregelprogramm (85) in Abhängigkeit von sicherheitsrelevanten Entscheidungskriterien aktiviert oder deaktiviert wird.

9. Verfahren nach einem der vorherigen Ansprüche, **dadurch gekennzeichnet, dass** das Einblasen von zusätzlicher Druckluft in den Luftansaugtrakt (8) der Brennkraftmaschine (2) von dem Fahrer manuell aktiviert oder deaktiviert werden kann.

## Claims

1. Method for operating a vehicle drivetrain (1) having an internal combustion engine (2), having a turbocharger (22) assigned to said internal combustion engine, having a device for injecting additional compressed air into an air intake tract (8) of the internal combustion engine (2), having a starting and shift clutch (60), and having a gearbox (62), wherein, for the preparation for and execution of a starting process, additional compressed air is injected into an air intake tract (8) of the internal combustion engine (2) only if, in a manner dependent on the present operating situation of the vehicle, this leads to advantageous operating behaviour of the vehicle with regard to the safety of the driver, fuel consumption and/or driving comfort and clutch wear, **characterized in that**, during the starting process, a coordinated actuation of the starting and shift clutch (60) and of the device for injecting additional compressed air into the air intake tract (8) of the internal combustion engine (2) is performed such that the adjustment speed or the dynamic behaviour of a clutch actuator (74), and the time, the pressure and the duration of the injection of additional compressed air, are coordinated with one another.

2. Method according to Claim 1, **characterized in that** the coordinated actuation of the starting and shift clutch (60) and of the device for injecting additional compressed air are controlled in a manner dependent on the vehicle mass (M), the travelling resistance (Fw), the roadway gradient (α), the route profile ahead (GPS), the ambient temperature (T), the starting time period expected by the driver or predefined and stored in a control unit (38, 66), the power demand (L) of the driver and/or the dynamic behaviour of the device for injecting additional compressed air and of the clutch actuator (74).

3. Method according to one of the preceding claims, **characterized in that** the device for injecting additional compressed air is intentionally not activated during a starting process if the engine torque demanded by the driver is lower than or equal to the engine torque during the initially purely naturally aspirated operation of the internal combustion engine (2).

4. Method according to one of the preceding claims, **characterized in that**, during a starting process, an injection of additional compressed air into the air intake tract (8) of the internal combustion engine (2) is performed immediately if, on the basis of route information (GPS), it is clear that the vehicle will drive onto a gradient, or such a gradient lies immediately ahead in the driving route.

5. Method according to one of the preceding claims, **characterized in that**, before a starting process, a compressed-air compressor (49) for generating the required compressed air is started immediately if, on the basis of route information (GPS), it is clear that the vehicle will drive onto a gradient, or such a gradient lies immediately ahead in the driving route, and a compressed-air vessel (45) falls below a predetermined lower filling state.

6. Method according to one of the preceding claims, **characterized in that** an injection of additional compressed air into the air intake tract (8) of the internal combustion engine (2) during a starting process is performed such that, by way of an increased engine torque, the slippage time of the starting and shift clutch (60) and the starting rotational speed of the internal combustion engine (2) are reduced.

7. Method according to one of the preceding claims, **characterized in that** an injection of additional compressed air into the air intake tract (8) of the internal combustion engine (2) during a starting process is performed such that, during the cranking of the internal combustion engine (2) by way of a starter motor (59), said starter motor is relieved of load owing to initially high gas pressures in the combustion chamber of the internal combustion engine (2).

8. Method according to one of the preceding claims, **characterized in that** the injection of additional compressed air into the air intake tract (8) of the internal combustion engine (2) is activated or deactivated by an anti-lock braking system (81), a traction control system (82), a body roll stabilization program (83), an off-road program (84) and/or by an adaptive cruise control program (85) in a manner dependent on safety-relevant decision criteria.

9. Method according to one of the preceding claims, **characterized in that** the injection of additional compressed air into the air intake tract (8) of the internal combustion engine (2) can be manually activated or deactivated by the driver.

## Revendications

1. Procédé pour faire fonctionner une chaîne cinématique d'un véhicule (1) comprenant un moteur à combustion interne (2), un turbocompresseur (22) associé à ce moteur à combustion interne, un dispositif pour souffler de l'air comprimé supplémentaire dans un conduit d'admission d'air (8) du moteur à combustion interne (2), un embrayage de démarrage et de changement de vitesses (60) ainsi qu'une transmission (62), dans lequel, pour la préparation et la mise en oeuvre d'une opération de démarrage, seulement l'air comprimé supplémentaire est soufflé dans un conduit d'admission d'air (8) du moteur à combustion interne (2) lorsque ceci conduit à un comportement de fonctionnement avantageux du véhicule, en fonction de la situation de fonctionnement actuelle du véhicule pour la sécurité du conducteur, la consommation de carburant et/ou le confort de conduite et l'usure de l'embrayage, **caractérisé en ce que** lors de l'opération de démarrage, un actionnement coordonné de l'embrayage de démarrage et de changement de vitesses (60) et du dispositif de soufflage d'air comprimé supplémentaire dans le conduit d'admission d'air (8) du moteur à combustion interne (2) a lieu de telle sorte que la vitesse de commande ou le comportement dynamique d'un actionneur d'embrayage (74) ainsi que l'instant, la pression et la durée de soufflage de l'air comprimé supplémentaire se produisent de manière adaptée les uns aux autres.

2. Procédé selon la revendication 1, **caractérisé en ce que** l'actionnement coordonné de l'embrayage de démarrage et de changement de vitesses (60) et du dispositif de soufflage d'air comprimé supplémentaire est commandé en fonction de la masse du véhicule (M), de la résistance à la conduite (Fw), de la pente de la chaussée (α), de l'allure imminente de la route (GPS), de la température environnante (T), du temps de conduite attendu par le conducteur ou fixé préalablement et mémorisé ou calculé dans un appareil de commande (38, 66), de la puissance (L) souhaitée par le conducteur et/ou du comportement dynamique du dispositif de soufflage d'air comprimé supplémentaire et de l'actionneur d'embrayage (74).

3. Procédé selon l'une quelconque des revendications précédentes, **caractérisé en ce que** le dispositif de soufflage d'air comprimé supplémentaire n'est spécifiquement pas activé au cours d'une opération de démarrage lorsque le couple moteur demandé par le conducteur est inférieur ou égal au couple moteur en mode initialement purement d'aspiration du moteur à combustion interne (2).

4. Procédé selon l'une quelconque des revendications précédentes, **caractérisé en ce que** lors d'une opération de démarrage, un soufflage d'air comprimé supplémentaire dans le conduit d'admission d'air (8) du moteur à combustion interne (2) a lieu immédiatement s'il est évident, sur la base d'informations de la route (GPS), que le véhicule doit avancer sur une pente ou qu'une telle pente sur la route est imminente.

5. Procédé selon l'une quelconque des revendications précédentes, **caractérisé en ce qu'**avant une opération de démarrage, un compresseur d'air comprimé (49) pour générer l'air comprimé nécessaire est mis en route immédiatement s'il est évident, sur la base d'informations de la route (GPS), que le véhicule doit avancer sur une pente ou qu'une telle pente sur la route est imminente, et qu'un réservoir d'air comprimé (45) est en-dessous d'un niveau de remplissage inférieur prédéterminé.

6. Procédé selon l'une quelconque des revendications précédentes, **caractérisé en ce qu'**un soufflage d'air comprimé supplémentaire dans le conduit d'admission d'air (8) du moteur à combustion interne (2) a lieu lors d'une opération de démarrage de telle sorte que le temps de patinage de l'embrayage de démarrage et de changement de vitesse (60) ainsi que le régime de démarrage du moteur à combustion interne (2) soient réduits par un couple moteur accru.

7. Procédé selon l'une quelconque des revendications précédentes, **caractérisé en ce qu'**un soufflage d'air comprimé supplémentaire dans le conduit d'admission d'air (8) du moteur à combustion interne (2) a lieu lors d'une opération de démarrage de telle sorte que lors du démarrage du moteur à combustion interne (2) au moyen d'un démarreur (59), celui-ci soit détendu par des pressions de gaz initialement élevées dans la chambre de combustion du moteur à combustion interne (2).

8. Procédé selon l'une quelconque des revendications précédentes, **caractérisé en ce qu'**un soufflage d'air comprimé supplémentaire dans le conduit d'admission d'air (8) du moteur à combustion interne (2) est activé ou désactivé en fonction de critères de décision relatifs à la sécurité par un système d'antiblocage (81), un système de régulation d'antipatinage à la traction (82), un programme de stabilisation du roulis (83), un programme de conduite tout-terrain (84) et/ou par un programme de réglage de distance (85).

9. Procédé selon l'une quelconque des revendications précédentes, **caractérisé en ce que** le soufflage d'air comprimé supplémentaire dans le conduit d'admission d'air (8) du moteur à combustion interne (2) peut être activé ou désactivé manuellement par le conducteur.
